# EUROPEAN PATENT APPLICATION

(11) **EP 2 336 268 A1**
(43) Date of publication of application: **22.06.2011**
(21) Application number: 10195306.5
(22) Date of filing: 16.12.2010
(51) Int. Cl.: C10G 1/04, C10G 31/10, B01D 11/02, B09C 1/02

(54) **Process for the treatment of oily residues coming from the oil industry**

(30) Priority: 18.12.2009 IT MI20092233
(71) Applicant: ENI S.p.A., 00144 Rome (IT)
(72) Inventor: Massetti, Felicia, 58011, CAPALBIO (GR) (IT); D'Abbieri, Michelangelo, 00139, ROMA (IT)
(74) Representative: Coletti, Raimondo

(57) **Abstract**

Process for the treatment of oily residues coming from the oil industry comprising:
- subjecting said oily residues to extraction by mixing with at least one organic solvent obtaining an oily residues-solvent mixture;
- subjecting said oily residues-solvent mixture to separation to obtain an oily phase, a solid phase and an aqueous phase.

## Description

The present invention relates to a process for the treatment of oily residues coming from the oil industry.

More specifically, the present invention relates to a process for the treatment of oily residues coming from the oil industry by extraction with at least one organic solvent having a boiling point ranging from 150°C to 400°C.

Said oily residues are preferably selected from waste products coming from the oil industry mainly consisting of: dregs deriving from the reclamation of storage tanks of crude oil, of combustible oil, of gas oil, etc.; from oil sludges, in particular oil sludges with a high viscosity and a high content of oils deriving from wastewater treatment plants (TAS); oily materials deriving from the reclamation of plant equipment, or contained in accumulation basins or ponds.

Said oily residues, depending on their origin, generally have an oil content ranging from 20% by weight to 80% by weight, a water content ranging from 10% by weight to 80% by weight, and a content of inerts (i.e. solid particles) ranging from 5% by weight to 50% by weight, with respect to the total weight of said oily residues.

The national regulatory reference framework for the classification of these oily residues is represented by the Directive of the Ministry of the Environment and Protection of the Territory of April 9, 2002 in which Annex A contains the list of waste products (European Waste Catalogue) according to the Decision 2000/532/CE and subsequent modifications, in force since January 1, 2002.

In this list, the types of waste products which can be qualified as dangerous are marked by an asterisk (*) and are represented, partly by isolated items (as the dangerousness is intrinsically linked to the origin of the waste product), and the remaining part by "specular" items of non-dangerous waste products (as the dangerousness is linked to the content of dangerous substances present in the waste product).

The oily residues, object of the present invention belong to the following categories relating to the generation of waste products: category Nr. 05 00 00: "Oil refinery waste, purification of natural gas and pyrolytic treatment of coal", and category Nr. 05 01 00: "Oil refinery waste" and are qualified as dangerous.

With respect to the final disposal of waste products, the Legislative Decree of January 13, 2003, Nr. 36, and the relative Actuation Decree of the Ministry of the Environment and Protection of the Territory of August 3, 2005 relating to the admissibility criteria of waste products in rubbish dumps, with the aim of preventing or reducing negative repercussions on the environment as much as possible, introduce much more restrictive conditions for the assignment of waste products to rubbish dumps from the point of view of both quantity and categories not admitted to this destination, and also with respect to the limits on a series of analytical parameters among which, on the eluate, the concentration of heavy metals and DOC ("Dissolved Organic Carbon") parameter, the latter being particularly critical due to the nature of the samples in question.

The intrinsic dangerousness of the waste products, object of the present invention, also implies the obligation of quantifying the TOC ("Total Organic Carbon") parameter on the sample as such, whose limit of 6%, which can be easily exceeded, makes it necessary to resort to appropriate treatment aimed at extracting and recovering the oily fraction contained therein and at stabilizing the solid phase obtained from their treatment, so as to make it compatible with the external disposal.

The necessity of treating said oily residues is therefore determined by both normative constraints and also necessities of an economical nature.

Processes for the recovery of the oily component from said oily residues are known in the art.

American patent US 3,716,474, for example, describes a process for the treatment of a sludge comprising: the thermal treatment of an emulsified sludge containing oil at a temperature ranging from 750°F (about 398°C) to 850°F (about 454°C), at a pressure ranging from 3,000 psi to 6,500 psi, in order to obtain a gaseous phase, an oily phase, an aqueous phase and a solid phase ("silt-coke phase"); the cooling of said products; the separation of said solid phase ("silt-coke phase") from other products; the separation of said aqueous phase from said gaseous phase and from said oily phase and the recovery of the oil and gas from the respective phases. This sludge derives from oil wells and essentially consists of an oil-in-water emulsion containing suspended silt and various other organic and inorganic materials, as well as other biological compounds. The recovery of oil is said to be particularly effective operating at a temperature of 750 °F (about 398°C).

European patent application EP 330 314 describes a process for the recycling of sludges containing oil and water comprising: (i) the introduction of a sludge having a relatively high oil content into a delayed coking unit operating under delayed coking conditions in the presence of a feedstock for delayed coking, in order to obtain the coking of the feedstock and the sludge; and (ii) the introduction of a sludge having a relatively high water content into said delayed coking unit, in order to cool the coal formed in the coking drum. Said sludges derive from oil refining. The above process is said to be capable of increasing the capacity of the delayed coking unit of recycling the sludges deriving from oil refining and of producing a coal having a low content of volatile substances.

International patent application WO 92/04424 describes a process for the recovery of oil from an oily waste sludge containing oil, water and at least 5% by weight of solids, from which the oil and water cannot be separated mechanically, comprising: (a) heating said sludge to a temperature sufficient for volatilizing the oil and water in said sludge and recovering the oil- and water-free solids, said solids being classified as non-dangerous by means of the EPA toxicity test; (b) condensation of said oil and of said water; (c) centrifugation of the condensate obtained in step (b) in order to separate the oil from the water and from the remaining solids; (d) recovery of the oil from said centrifugation by consecutive refinery processings; and (e) recovery of the water from said centrifugation, said water being sufficiently clean to be subjected to subsequent treatment in conventional water treatment plants, in order to lower its C.O.D. ("Chemical Oxygen Demand") to acceptable values. The above process is said to be useful for the recovery of oil which can be subsequently used for refinery processings, and to be capable of producing non-dangerous aqueous and solid residues.

International patent application WO 99/25497 describes a method for treating an aqueous waste sludge coming from a refinery plant comprising: (a) heating said aqueous waste sludge to a temperature of about 180°F (about 82°C) or higher, and maintaining said sludge at said temperature for a period of time sufficient for conditioning said sludge, including the melting of the solids present, the reduction of the apparent viscosity of said sludge and the reduction of the density of the oil fractions present in said sludge; (b) sending said sludge, after thermal treatment, to a centrifuge in order to separate a first liquid effluent containing liquid oil fractions from a first cake containing bound oil residues; (c) dispersing said cake in water in order to obtain a second sludge; (d) treating said second sludge by the addition of a quantity of hydrogen peroxide which is such as to lyse and release said oil residues from the inert solids present in said first cake; (e) sending said second sludge to a second centrifuge in order to separate a second liquid effluent containing oil fractions from a second cake, said second cake containing said inert solids and being substantially free of hydrocarbon residues. The above method is said to be capable of recovering hydrocarbons and solid residues from said waste sludges, said solid residues being allowed to be disposed of as non-dangerous products.

Italian patent IT 1,359,985 describes a method for reducing the quantity of high-viscosity waste products of a petrochemical origin to be sent to rubbish dumps, based on hydrocarbon fractions and water in the form of a stable emulsion, wherein the waste product to be quantitatively reduced is essentially subjected to the following operations: treatment with an organic solvent, apolar or having a polarity lower than that of water; addition of an aqueous solution having a high saline concentration; optionally, stirring insufficient for causing the formation of a metastable emulsion; physical separation of the solid phases present, with conventional means, from the aqueous phase saturated with hydrocarbons and from the organic phase consisting of solvent and hydrocarbons; recovery and re-use of the aqueous phase and of the organic phase; sending the solid phases forming the resulting material in solid state, to rubbish dumps. The main advantage of the above treatment indicated is that of being in line with the law provisions in the environmental field, which privilege and favour the minimization of material destined for disposal in rubbish dumps.

The processes described above, however, may also have some disadvantages, such as, for example:
- the necessity of resorting to thermal treatment at relatively high temperatures in order to recover the high-boiling components of which the oily fraction is composed, which can lead to both the production of off-gas with a consequent negative environmental impact, and also high energy consumptions with consequent high management costs;
- the use of chemicals, for example, hydrogen peroxide, which can lead to the formation of undesired oxidation compounds and can lead to high management costs;
- the use of saline solution which can lead to the production of water comprising particulate and dispersed salts which can negatively influence the subsequent purification treatments of said water in order to reduce the C.O.D (Chemical Oxygen Demand).

The Applicant has now found that the treatment of oily residues coming from the oil industry can be advantageously carried out by subjecting said oily residues to extraction in the presence of at least one organic solvent having a boiling point ranging from 150°C to 400°C.

Said process is not influenced by the content of water, solids and oil of said oily residues, nor by the composition of the oil itself, said oil being of such a quality as to be able to be conveniently recycled to the refinery.

Furthermore, said process allows a good recovery yield of the oil to be obtained, i.e. a recovery yield of the oil higher than or equal to 80%, even when operating with a limited energy requirement, said yield being calculated with respect to the total quantity of oil present in said oily residues.

Furthermore, said process allows an oily phase (slop) to be obtained, comprising a quantity of water and inerts (i.e. solid particles) lower than or equal to 2% by weight with respect to the total weight of said oily phase, which can be sent directly to the refinery.

Said process also allows a final solid residue i.e. solid phase, to be obtained in a limited amount which can be disposed of as waste product, for example, by means of thermodestruction. The aqueous phase obtained is compatible with refinery water treatment plants (TAS).

Said process therefore provides a double advantage: the recovery of oil and reduction of the solid residue.

An object of the present invention therefore relates to a process for the treatment of oily residues coming from the oil industry comprising:
- subjecting said oily residues to extraction by mixing with at least one organic solvent having a boiling point ranging from 150°C to 400°C, preferably ranging from 170°C to 380°C, operating at a temperature higher than or equal to 70°C, preferably ranging from 80°C to 100°C, at a pressure ranging from 1 atm to 1.3 atm, preferably ranging from 1 atm to 1.1 atm, for a time ranging from 30 minutes to 90 minutes, preferably ranging from 50 minutes to 70 minutes, obtaining an oily residues-solvent mixture;
- subjecting said oily residues-solvent mixture to separation to obtain an oily phase, a solid phase and an aqueous phase.

For the purposes of the present invention and of the following claims, the definitions of the numerical ranges always comprise the extremes unless otherwise specified.

According to a preferred embodiment of the present invention, said oily residues can be selected from waste products coming from the oil industry mainly consisting of: dregs coming from the reclamation of storage tanks of crude oil, of combustible oil, of gas oil, etc.; oily sludges, in particular oily sludges with a high viscosity and a high content of oils deriving from wastewater treatment plants (TAS); oily materials coming from the reclamation of plant equipment, or contained in accumulation tanks or ponds.

In order to eliminate the grossest particles present in said oily residues, it is advantageous to subject said oily residues to granulometric separation.

According to a preferred embodiment of the present invention, said process comprises subjecting said oily residues, before being subjected to extraction, to granulometric separation, obtaining particles of oily residues having a particle-size lower than or equal to 10 mm, preferably ranging from 0.05 mm to 0.30 mm.

The particles of oily residues having a particle-size higher than or equal to 10 mm, i.e. non-reusable fractions, are collected in suitable containers, subsequently stored, characterized and disposed of, for example, by means of thermodestruction.

According to a preferred embodiment of the present invention, said granulometric separation can be carried out by means of vibrating screens, cyclones, preferably vibrating screens.

According to a preferred embodiment of the present invention, the weight ratio between said oily residues and said organic solvent can range from 1:0.5 to 1:10, preferably from 1:1 to 1:5.

According to a preferred embodiment of the present invention, said organic solvent can have a density, measured at 20°C and at atmospheric pressure (1 atm), lower than or equal to 1.5 g/cm³, preferably ranging from 0.5 g/cm³ to 1 g/cm³.

According to a preferred embodiment of the present invention, said organic solvent can be selected from: refinery cuts which comprise mixtures including aliphatic hydrocarbons and aromatic hydrocarbons, in particular mixtures known as Light Cycle Oil (LCO); gas oils; or mixtures thereof. Said organic solvent can preferably be selected from known mixtures such as Light Cycle Oil (LCO).

In order to favour the mixing of said solid residues and said organic solvent, said organic solvent can be preheated.

According to a preferred embodiment of the present invention, said organic solvent can be preheated to a temperature ranging from 40°C to 90°C, preferably ranging from 50°C to 80°C, before being mixed with said oily residues.

Said oily residues can be subjected to extraction one or more times. Said oily residues are preferably subjected to extraction from 1 time to 5 times, more preferably from 1 time to 2 times.

According to a preferred embodiment of the present invention, said oily residues can be sent to granulometric separation by means of a volumetric pump such as, for example, a single-screw pump, or a circumferential piston pump, preferably a circumferential piston pump.

In order to fluidify said oily residues before sending them to granulometric separation, at least one organic solvent can be added to said volumetric pump, in particular to the suction system of said volumetric pump.

According to a preferred embodiment of the present invention, at least one organic solvent can be added to the suction system of said volumetric pump, said organic solvent being selected from those indicated above.

According to a preferred embodiment of the present invention, said organic solvent can be added to the suction system of said volumetric pump in such a quantity that the weight ratio between said oily residues and said organic solvent ranges from 1:0.05 to 1:0.3, preferably ranging from 1:0.1 to 1:0.2.

According to a preferred embodiment of the present invention, said volumetric pump can operate at a number of revs (rpm) ranging from 10 rpm to 100 rpm, preferably ranging from 20 rpm to 40 rpm.

According to a preferred embodiment of the present invention, said volumetric pump can operate at a temperature ranging from 5°C to 60°C, preferably ranging from 20°C to 50°C.

In order to prevent the formation of emulsions between said oily residues and said organic solvent, it is advantageous to carry out said mixing under low stirring, i.e. with a relative low number of revs.

According to a preferred embodiment of the present invention, said mixing (i.e. the mixing of said oily residues with said organic solvent), can be carried out with a number of revs ranging from 20 rpm to 100 rpm, preferably ranging from 40 rpm to 80 rpm.

Said mixing (i.e. the mixing of said oily residues with said organic solvent), can be carried out in mixers known in the art, preferably in Continuous Stirred Tank Reactors (CSTR).

According to a preferred embodiment of the present invention, said separation (i.e. the separation of said oily residues-solvent mixture) can be carried out by centrifugation, cycloning, sedimentation, preferably by means of centrifugation, more preferably by means of a decanter centrifuge or a three-phase centrifuge.

Preferably, if said separation is carried out by means of a decanter centrifuge, in order to favour the precipitation of the solid phase during said separation (i.e. the separation of said oily residues-solvent mixture), at least one flocculating agent can be added to said oily residues-solvent mixture.

According to a preferred embodiment of the present invention, said separation is carried out by means of a decanter centrifuge and at least one flocculating agent can be added to said oily residues-solvent mixture.

Said flocculating agent is preferably added in such a quantity as to obtain a concentration of said flocculating agent in said oily residues-solvent mixture ranging from 1% by weight to 10% by weight, preferably ranging from 2% by weight to 5% by weight, with respect to the total weight of said oily residues-solvent mixture. Said flocculating agent can preferably be used in aqueous solution at a concentration ranging from 1% by weight to 5% by weight.

According to a preferred embodiment of the present invention, said flocculating agent can be selected from organic cationic flocculating agents such as polyamines, quaternary polyamines, polyguanidines, polyethyleneimines, polyvinylpyridine, polyvinylamines, polyallylamines, dimethylamine epichloridrine ethylenediamine polymer, poly(N,N-dimethyl-2-hydroxypropyleneammonium chloride), poly(4-vinyl-1-methylpyridinium bromide), polydiallyldimethylammonium chloride, copolymers of quaternary and polyquaternary vinylimidazole, or mixtures thereof.

Preferably, if said separation (i.e. the separation of said oily residues-solvent mixture) is carried out by means of a decanter centrifuge, said oily residues-solvent mixture, to which a flocculating agent has been optionally added, can be subjected to centrifugation, operating at a number of revs ranging from 5 rpm to 5,000 rpm, preferably ranging from 2,500 rpm to 4,500 rpm, at a temperature ranging from 50°C to 100°C, preferably ranging from 60°C to 95°C, for a time ranging from 0.5 minutes to 10 minutes, preferably from 1 minute to 3 minutes.

At the end of the above centrifugation, the following two phases are obtained:
(i) a liquid phase comprising a quantity of water lower than or equal to 50% by weight, preferably ranging from 10% by weight to 30% by weight, with respect to the total weight of said liquid phase and a quantity of solid particles (i.e. inerts) lower than or equal to 10% by weight, preferably ranging from 0.5% by weight to 5% by weight with respect to the total weight of said liquid phase, which is subjected to sedimentation;
(ii) a solid phase comprising a quantity of inerts (i.e. solid particles) higher than or equal to 50% by weight, preferably ranging from 60% by weight to 90% by weight with respect to the total weight of said solid phase, which can be sent to thermodestruction.

In order to favour the water-oil separation, at least one demulsifying agent can be added to said liquid phase (i), before being sent to sedimentation.

According to a preferred embodiment of the present invention, at least one demulsifying agent can be added to said liquid phase (i), before being sent to sedimentation.

Said demulsifying agent can preferably be added in such a quantity as to obtain a concentration of said demulsifying agent in said liquid phase (i) ranging from 0.1% by weight to 1% by weight, preferably ranging from 0.2% by weight to 0.5% by weight, with respect to the total weight of said liquid phase (i).

According to a preferred embodiment of the present invention, said demulsifying agent can be selected from mixtures comprising:
- at least one surfactant which can be selected from organic anionic surfactants such as, for example, alkyl benzene sulfonic acids or alkyl sulfonic acids having from 10 to 16 carbon atoms in the alkyl chain, salts of alkaline metals of said acids, amine salts of said acids, or mixtures thereof; or from organic cationic surfactants such as, for example, derivatives of quaternary ammonium, salts of alkylpyridinium, or mixtures thereof; or mixtures thereof;
- at least one hydrocarbon such as, for example, naphtha, xylene, toluene, or mixtures thereof;
- at least one aliphatic alcohol such as, for example, hexanol, heptanol, octanol, decanol, benzyl alcohol, or mixtures thereof

After the addition of said demulsifying agent, in order to prevent the formation of emulsions, it is advantageous to subject said liquid phase (i) to mixing under low stirring, i.e. at a relatively low number of revs.

According to a preferred embodiment of the present invention, the mixing of said liquid phase (i) with said de-emulsifying agent can be carried out with a number of revs ranging from 20 rpm to 100 rpm, preferably ranging from 40 rpm to 80 rpm.

Said mixing (i.e. the mixing of said liquid phase (i) with said de-emulsifying agent) can be carried out in mixers known in the art, preferably in Continuous Stirred Tank Reactors (CSTR).

According to a preferred embodiment of the present invention, the mixing of said liquid phase (i) with said de-emulsifying agent can be carried out at a temperature higher than or equal to 70°C, preferably ranging from 80°C to 100°C.

According to a preferred embodiment of the present invention, the mixing of said liquid phase (i) with said de-emulsifying agent can be carried out for a time ranging from 5 minutes to 30 minutes, preferably ranging from 10 minutes to 15 minutes.

Said sedimentation is preferably carried out at a temperature ranging from 40°C to 100°C, preferably ranging from 50°C to 95°C, for a time ranging from 12 hours to 70 hours, preferably ranging from 15 hours to 60 hours.

At the end of said sedimentation, the following two phases are obtained:
(iii) an oily phase (slop) comprising a quantity of water and solid particles (i.e. inerts) lower than or equal to 2% by weight with respect to the total weight of said oily phase and the organic solvent used in the above process, which can be sent to the oil refinery plant;
(iv) an aqueous phase comprising a quantity higher than or equal to 95% by weight, preferably ranging from 98% by weight to 99.9% by weight, with respect to the total weight of said aqueous phase, and having a C.O.D. ("Chemical Oxygen Demand") ranging from 2,000 mg/l to 4,000 mg/l, which can be sent to the water treatment plant (TAS).

Preferably, if said separation (i.e. the separation of said oily residues/solvent mixture) is carried out by means of a three-phase centrifuge, in order to favour the water-oil separation, at least one demulsifying agent can be added to said oily residues/solvent mixture.

According to a preferred embodiment of the present invention, said separation is carried out by means of a three-phase centrifuge and at least one demulsifying agent can be added to said oily residues/solvent mixture.

Said demulsifying agent is preferably added in such a quantity as to obtain a concentration of said demulsifying agent in said oily residues/solvent mixture, ranging from 0.1% by weight to 1% by weight, preferably ranging from 0.2% by weight to 0.5% by weight, with respect to the total weight of said oily residues/solvent mixture.

Said demulsifying agent can be selected from those listed above.

Preferably, if said separation (i.e. the separation of said oily residues/solvent mixture) is carried out by means of a three-phase centrifuge, said oily residues/solvent mixture, to which at least one demulsifying agent has optionally been added, can be subjected to centrifugation operating at a number of revs ranging from 5 rpm to 5,000 rpm, preferably ranging from 2,500 rpm to 4,500 rpm, at a temperature ranging from 50°C to 100°C, preferably ranging from 60°C to 95°C, for a time ranging from 0.5 minutes to 10 minutes, preferably ranging from 1 minute to 3 minutes.

At the end of said centrifugation, the following three phases are obtained:
(v) an oily phase (slop) comprising a quantity of water and inerts (i.e. solid particles) lower than or equal to 2% by weight with respect to the total weight of said oily phase and the organic solvent used in the above process, which can be sent to the oil refinery plant;
(vi) a solid phase comprising a quantity of inert products (i.e. solid particles) higher than or equal to 50% by weight, preferably ranging from 60% by weight to 90% by weight, with respect to the total weight of said solid phase, which can be sent to thermodestruction;
(vii) an aqueous phase comprising a quantity of water higher than or equal to 95% by weight, preferably ranging from 98% by weight to 99.9% by weight, with respect to the total weight of said aqueous phase, and having a C.O.D. ("Chemical Oxygen Demand") ranging from 2,000 mg/l to 4,000 mg/l, which can be sent to the water treatment plant (TAS).

Preferably, said oily phase (iii) or said oily phase (v) can be sent to subsequent treatment such as, for example, upgrading treatment, via hydrogenation or hydrocracking, in order to obtain hydrocarbon fractions having a higher commercial value.

According to a preferred embodiment of the present invention, said process is carried out in the presence of at least one inert gas, such as, for example, nitrogen, argon, or mixtures thereof, preferably in the presence of nitrogen.

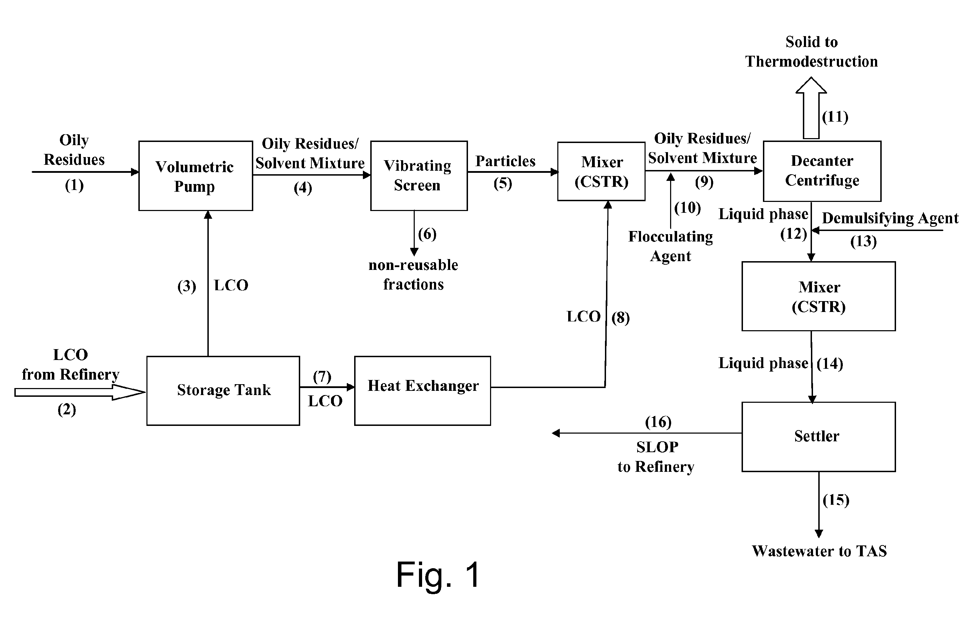

The present invention will be now illustrated by various illustrative embodiments with reference to Figures 1-2 provided hereunder.

Figure 1 schematically represents an embodiment of the process object of the present invention. The oily residues (1) are sucked by means of a volumetric pump, preferably a circumferential piston pump, to which suction system an organic solvent (e.g. LCO) (3) coming from the refinery (2) and stored in a storage tank, has been sent.

The oily residues/solvent mixture (4) leaving the volumetric pump is sent to granulometric separation (i.e. sieving) carried out, for example, through a vibrating screen. From said sieving come out non-reusable fractions (6) (e.g., particles having a particle-size higher than or equal to 10 mm) which are sent to suitable containers, subsequently stored, characterized and disposed of, for example, by thermodestruction (not represented in Figure 1) and particles having a particle-size lower than or equal to 10 mm which are sent (5), by means of a volumetric pump, preferably a circumferential piston pump (not represented in Figure 1) to a mixer, preferably a Continuous Stirred-Tank Reactor (CSTR), said mixer preferably being heated to 90°C by means of medium-pressure vapour circulating in the inner jacket. To said mixer is also sent an organic solvent (8), preferably LCO, previously sent (7) to a heat exchanger in which it is preheated (e.g., to 70°C).

After about 60 minutes, an oily residues/solvent mixture (9) leaves said mixer and is sent, by means of a volumetric pump, preferably a circumferential piston pump (not represented in Figure 1) to a decanter centrifuge, after the addition of a suitable flocculating agent (10) (e.g., dimethylamine epichloridrine ethylenediamine polymer).

At the end of the centrifugation, the following two phases are obtained:
- a solid phase (11) comprising a quantity of inerts (i.e. solid particles) higher than or equal to 50% by weight with respect to the total weight of said solid phase, which is sent to thermodestruction (not represented in Figure 1);
- a liquid phase (12) comprising a quantity of water lower than or equal to 50% by weight with respect to the total weight of said liquid phase and a quantity of solid particles (i.e. inerts) lower than or equal to 10% by weight with respect to the total weight of said liquid phase.

Said liquid phase (12) is sent to a mixer, preferably a Continuous Stirred-Tank Reactor (CSTR), after the addition of a demulsifying agent (13) (e.g., a mixture comprising an organic anionic surfactant, naphtha and an aliphatic alcohol), said mixer preferably being heated to 90°C by means of medium-pressure vapour circulating in the internal jacket.

At the outlet of said mixer, after about 30 minutes, said liquid phase (14) is sent to a settler where it remains for about 48 hours, at a temperature of about 90°C.

At the end of said sedimentation, the following two phases are obtained:
- an oily phase (16) (slop) comprising a quantity of water and inerts (i.e. solid particles) lower than or equal to 2% by weight with respect to the total weight of said oily phase and the organic solvent (i.e. LCO) used in the above process, which is sent to the oil refinery plant (not represented in Figure 1) ;
- an aqueous phase (25) comprising a quantity of water higher than or equal to 95% by weight with respect to the total weight of said aqueous phase, and having a C.O.D. ("Chemical Oxygen Demand") ranging from 2,000 mg/l to 4,000 mg/l, which is sent to the water treatment plant (TAS) (not represented in Figure 1).

The above process is carried out in an inert atmosphere, in the presence of nitrogen, which is introduced into the spaces at the head of the various apparatuses (not represented in Figure 1).

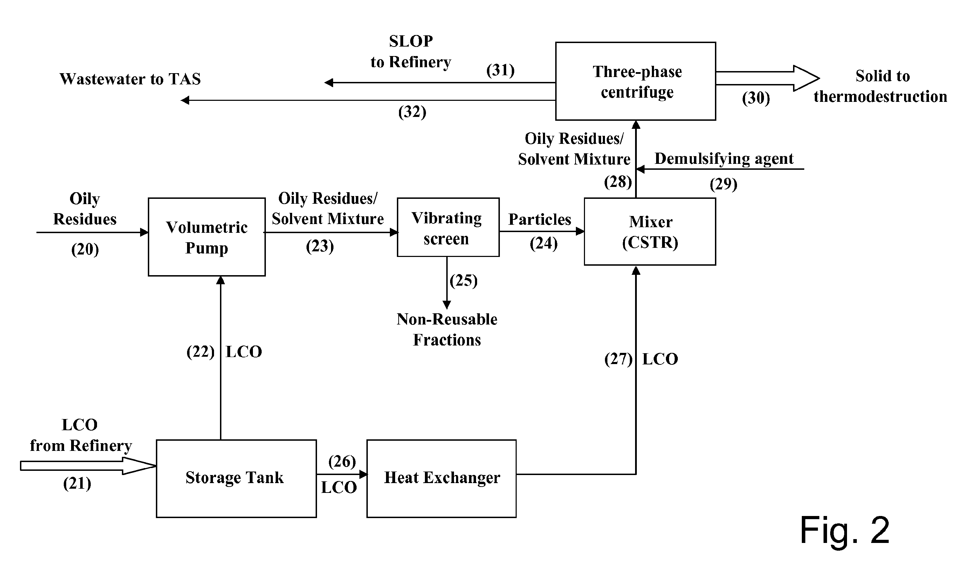

Figure 2 represents a further embodiment of the process object of the present invention. The oily residues (20) are sucked by means of a volumetric pump, preferably a circumferential piston pump, to which suction system an organic solvent (e.g., LCO) (22) coming from the refinery (21) and stored in a storage tank, has been sent.

The oily residues/solvent mixture (23) leaving the volumetric pump is sent to granulometric separation (i.e. sieving) carried out, for example, through a vibrating screen. From said sieving come out non-reusable fractions (25) (e.g., particles having a particle-size higher than or equal to 10 mm) which are sent to suitable containers, subsequently stored, characterized and disposed of, for example, by thermodestruction (not represented in Figure 2) and particles having a particle-size lower than or equal to 10 mm which are sent (24), by means of a volumetric pump, preferably a circumferential piston pump (not represented in Figure 2) to a mixer, preferably a Continuous Stirred-Tank Reactor (CSTR), said mixer preferably being heated to 90°C by means of medium-pressure vapour circulating in the inner jacket. To said mixer is also sent an organic solvent (27), preferably LCO, previously sent (26) to a heat exchanger in which it is preheated (e.g., 70°C).

After about 60 minutes, an oily residues/solvent mixture (28) leaves said mixer and is sent, by means of a volumetric pump, preferably a circumferential piston pump (not represented in Figure 2) to a three-phase centrifuge, after the addition of a suitable demulsifying agent (29) (e.g., a mixture comprising an organic anionic surfactant, naphtha and an aliphatic alcohol).

At the end of the centrifugation, the following three phases are obtained:
- a solid phase (30) comprising a quantity of inerts (i.e. solid particles) higher than or equal to 50% by weight with respect to the total weight of said solid phase, which is sent to thermodestruction (not represented in Figure 2);
- an oily phase (31) (slop) comprising a quantity of water and inert products (i.e. solid particles) lower than or equal to 2% by weight with respect to the total weight of said oily phase and the organic solvent used in the above process, which is sent to the oil refinery plant (not represented in Figure 2);
- an aqueous phase (32) comprising a quantity of water higher than or equal to 95% by weight with respect to the total weight of said aqueous phase, and having a C.O.D. ("Chemical Oxygen Demand") ranging from 2,000 mg/l to 4,000 mg/l, which is sent to the water treatment plant (TAS) (not represented in Figure 2).

The above process is carried out in an inert atmosphere, in the presence of nitrogen, which is introduced into the spaces at the head of the various apparatuses (not represented in Figure 2).

Some illustrative and non-limiting examples are provided for a better understanding of the present invention and for its embodiment.

### EXAMPLE 1

3,000 kg/h of oily residues comprising: 45% by weight of water, 50% by weight of oil and 5% by weight of inerts with respect to the total weight of said oily residues, were treated in a prototype plant.

The Example was carried out in an inert atmosphere, in the presence of nitrogen, which is introduced into the spaces at the head of the various apparatuses used.

With reference to Figure 1, said oily residues (1) were sucked by means of a circumferential piston pump, to which suction system 450 kg/h of LCO (3) were added. Said pump operated under the following operative conditions:
- room temperature (25°C);
- revs number: 27 rpm.

At the outlet of the pump, an oily residues-solvent mixture (4) was obtained, which was sent to the vibrating screen (i.e. sieving) equipped with a net having a mesh with dimensions equal to 10 mm, obtaining:
- non-reusable fractions (6) (i.e. particles having a particle-size higher than or equal to 10 mm) which were discharged into suitable 1m³ containers with a hydraulically openable bottom, unloaded in turn into roll-off bins, to be stored, characterized and then disposed of by thermodestruction (not represented in Figure 1);
- particles (5) having a particle-size lower than or equal to 10 mm which were sent, by means of a circumferential piston pump (not represented in Figure 1), to the Continuous Stirred-Tank Reactor (CSTR).
   2,550 kg/h of LCO (8) [weight ratio oily residues:total solvent (LCO sent to the pump + LCO sent to the reactor) = 1:1], previously heated to 70°C, in a heat exchanger, were sent to said reactor.

The mixing of said solid residues-solvent mixture (9) with LCO (8) in said reactor was carried out at a temperature of 90°C, at a revs number of 50 rpm, for 60 minutes.

At the end of the mixing, an oily residues-solvent mixture (9) was obtained, which was sent, by means of a circumferential piston pump (not represented in Figure 1), to the decanter centrifuge, operating at a temperature of 70°C, at 4,000 rpm and for a time of 2 minutes, after the addition of 3% by weight with respect to the total weight of said oily residues-solvent mixture of the dimethylamine epichloridrine ethylenediamine polymer (aqueous solution at a concentration of 2%) [flocculating agent (10)]. .

At the end of the centrifugation, the following two phases were obtained:
- a solid phase (11) containing about 70% of inerts with respect to the total weight of said solid phase, which was sent to thermodestruction (not represented in Figure 1);
- a liquid phase (12) comprising a quantity of water equal to 23% by weight with respect to the total weight of said liquid phase and a quantity of solid particles (i.e. inerts) equal to 1% by weight with respect to the total weight of said liquid phase.

Said liquid phase (12) was sent to the Continuous Stirred-Tank Reactor (CSTR) after the addition of 0.4% by weight with respect to the total weight of said liquid phase of a mixture comprising an organic anionic surfactant, naphtha and an aliphatic alcohol) [demulsifying agent (13)]. .

The mixing of said liquid phase (12) with said demulsifying agent (13) was carried out at a temperature of 90°C, at a revs number of 65 rpm, for 30 minutes.

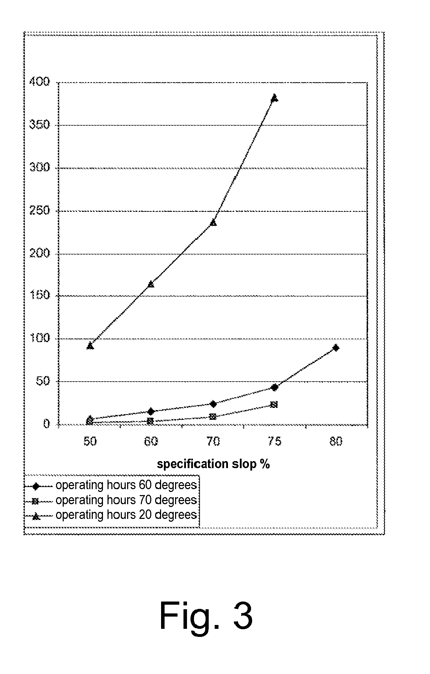

At the end of the mixing, the liquid phase (14) was subjected to sedimentation operating at three different temperatures, i.e. 20°C, 60°C and 70°C: the data obtained are indicated in Figure 3.

As can be observed from the graph shown in Figure 3 (in abscissa the % of slop according to specification is indicated, and in the ordinate the residence time in the settler in hours is indicated), at an operating temperature of the settler of 70°C, it is possible to bring about 75% of the slop according to specification, under static conditions, after about 24 hours. In order to increase the percentage (>80%) according to specification the operating temperature of the settler must be about 90°C with residence times in the settler not less than 48 hours.

### EXAMPLE 2

Example 2 was carried out operating as described in Example 1, except for the fact that the liquid phase (14) was subjected to sedimentation, at 90°C, for a time of 48 hours.

At the end of the sedimentation, the following two phases were obtained:
- an oily phase (16) (which can be indicated as slop) comprising 98.3% by weight of oil (said oil also comprises the LCO used) with respect to the total weight of said oily phase, a quantity of inerts (i.e. solid particles) equal to 1.3% by weight with respect to the total weight of said oily phase, and a quantity of water equal to 0.4% by weight with respect to the total weight of said oily phase, which was sent to the oil refinery plant (not represented in Figure 1);
- an aqueous phase (15) comprising a quantity of water equal to 99.4% by weight with respect to the total weight of said aqueous phase, and having a C.O.D. ("Chemical Oxygen Demand") equal to 2,500 mg/l, which was sent to the water treatment plant (TAS) (not represented in Figure 1).

## Claims

1. A process for the treatment of oily residues coming from the oil industry comprising:
- subjecting said oily residues to extraction by mixing with at least one organic solvent having a boiling point ranging from 150°C to 400°C, operating at a temperature higher than or equal to 70°C, at a pressure ranging from 1 atm to 1.3 atm, for a time ranging from 30 minutes to 90 minutes, obtaining an oily residues-solvent mixture;
- subjecting said oily residues-solvent mixture to separation to obtain an oily phase, a solid phase and an aqueous phase.

2. The process for the treatment of oily residues coming from the oil industry according to claim 1, wherein said organic solvent has a boiling point ranging from 170°C to 380°C.

3. The process for the treatment of oily residues coming from the oil industry according to claim 1 or 2, wherein said temperature ranges from 80°C to 100°C.

4. The process for the treatment of oily residues coming from the oil industry according to any of the previous claims, wherein said pressure ranges from 1 atm to 1.1 atm.

5. The process for the treatment of oily residues coming from the oil industry according to any of the previous claims, wherein said time ranges from 50 minutes to 70 minutes.

6. The process for the treatment of oily residues coming from the oil industry according to any of the previous claims, wherein said oily residues are selected from waste products coming from the oil industry mainly consisting of: dregs coming from the reclamation of storage tanks of crude oil, of combustible oil, of gas oil; oily sludges, in particular oily sludges with a high viscosity and a high oil content deriving from wastewater treatment plants (TAS); oily materials coming from the reclamation of plant equipments, or contained in accumulation tanks or ponds.

7. The process for the treatment of oily residues coming from the oil industry according to any of the previous claims, wherein said process comprises subjecting said oily residues, before subjecting them to extraction, to granulometric separation, obtaining oily residues particles having a particle-size lower than or equal to 10 mm.

8. The process for the treatment of oily residues coming from the oil industry according to claim 7, wherein said granulometric separation is carried out by means of vibrating screens, cyclones.

9. The process for the treatment of oily residues coming from the oil industry according to any of the previous claims, wherein the weight ratio between said oily residues and said organic solvent ranges from 1:0.5 to 1:10.

10. The process for the treatment of oily residues coming from the oil industry according to any of the previous claims, wherein said organic solvent has a density, measured at 20°C and at atmospheric pressure (1 atm), lower than or equal to 1.5 g/cm³.

11. The process for the treatment of oily residues coming from the oil industry according to any of the previous claims, wherein said organic solvent is selected from: refinery cuts which comprise mixtures including aliphatic hydrocarbons and aromatic hydrocarbons such as mixtures known as Light Cycle Oil (LCO); diesel fuels; or mixtures thereof.

12. The process for the treatment of oily residues coming from the oil industry according to claim 11, wherein said organic solvent is selected from mixtures known as Light Cycle Oil (LCO).

13. The process for the treatment of oily residues coming from the oil industry according to any of the previous claims, wherein said organic solvent is preheated to a temperature ranging from 40°C to 90°C, before being mixed with said oily residues.

14. The process for the treatment of oily residues coming from the oil industry according to any of the previous claims, wherein said oily residues are subjected to extraction from 1 time to 5 times.

15. The process for the treatment of oily residues coming from the oil industry according to any of the previous claims, wherein said oily residues are sent to granulometric separation by means of a volumetric pump such as a single-screw pump, or a circumferential piston pump.

16. The process for the treatment of oily residues coming from the oil industry according to claim 15, wherein at least one organic solvent is added to the suction system of said volumetric pump, said organic solvent being selected from those according to claim 11 or 12.

17. The process according to claim 16, wherein said organic solvent is added to the suction system of said volumetric pump in such a quantity that the weight ratio between said oily residues and said organic solvent ranges from 1:0.05 to 1:0.3.

18. The process for the treatment of oily residues coming from the oil industry according to any of the claims from 15 to 17, wherein said volumetric pump operates with a revs number (rpm) ranging from 10 rpm to 100 rpm.

19. The process for the treatment of oily residues coming from the oil industry according to any of the claims from 15 to 18, wherein said volumetric pump operates at a temperature ranging from 5°C to 60°C.

20. The process for the treatment of oily residues coming from the oil industry according to any of the previous claims, wherein said mixing (i.e. the mixing of said oily residues with said organic solvent), is carried out at a revs number ranging from 20 rpm to 100 rpm.

21. The process for the treatment of oily residues coming from the oil industry according to any of the previous claims, wherein said separation (i.e. the separation of said oily residues-solvent mixture) is carried out by means of centrifugation, cycloning, sedimentation.

22. The process for the treatment of oily residues coming from the oil industry according to any of the claims from 1 to 20, wherein said separation (i.e. the separation of said oily residues-solvent mixture) is carried out by means of a decanter centrifuge, or by means of a three-phase centrifuge.

23. The process for the treatment of oily residues coming from the oil industry according to claim 22, wherein said separation is carried out by means of a decanter centrifuge and at least one flocculating agent is added to said oily residues-solvent mixture.

24. The process for the treatment of oily residues coming from the oil industry according to claim 23, wherein said flocculating agent is added in a quantity so as to obtain a concentration of said flocculating agent in said oily residues-solvent mixture ranging from 1% by weight to 10% by weight with respect to the total weight of said oily residues-solvent mixture.

25. The process for the treatment of oily residues coming from the oil industry according to claim 23 or 24, wherein said flocculating agent is selected from organic cationic flocculating agents such as polyamines, quaternary polyamines, polyguanidines, polyethyleneimines, polyvinylpyridine, polyvinylamines, polyallylamines, dimethylamine epichloridrine ethylenediamine polymer, poly(N,N-dimethyl-2-hydroxypropyleneammonium chloride), poly(4-vinyl-1-methylpyridinium bromide), polydiallyldimethylammonium chloride, copolymers of quaternary or polyquaternary vinylimidazole, or mixtures thereof.

26. The process for the treatment of oily residues coming from the oil industry according to any of the claims from 23 to 25, wherein said separation is carried out in a decanter centrifuge operating at a revs number ranging from 5 rpm to 5,000 rpm, at a temperature ranging from 50°C to 100°C, for a time ranging from 0.5 minutes to 10 minutes, obtaining the following two phases: (i) a liquid phase which is subjected to sedimentation; (ii) a solid phase which is sent to thermodestruction.

27. The process for the treatment of oily residues coming from the oil industry according to claim 26, wherein, to said liquid phase (i), before subjecting it to sedimentation, at least one de-emulsifying agent is added and the mixing of said liquid phase (i) with said de-emulsifying agent is carried out with a revs number ranging from 20 rpm to 100 rpm, at a temperature higher than or equal to 70°C, for a time ranging from 5 minutes to 30 minutes.

28. The process for the treatment of oily residues coming from the oil industry according to claim 27, wherein said de-emulsifying agent is added in a quantity so as to obtain a concentration of said de-emulsifying agent in said liquid phase (i) ranging from 0.1% by weight to 1% by weight with respect to the total weight of said liquid phase (i).

29. The process for the treatment of oily residues coming from the oil industry according to claim 27 or 28, wherein said de-emulsifying agent is selected from mixtures comprising:
- at least one surfactant selected from organic anionic surfactants such as alkyl benzene sulfonic acids or alkyl sulfonic acids having from 10 to 16 carbon atoms in the alkyl chain, salts of alkaline metals of said acids, amine salts of said acids, or mixtures thereof; or from organic cationic surfactants such as derivatives of quaternary ammonium, salts of alkylpyridine, or mixtures thereof; or mixtures thereof;
- at least one hydrocarbon such as naphtha, xylene, toluene, or mixtures thereof;
- at least one aliphatic alcohol such as hexanol, heptanol, octanol, decanol, benzyl alcohol, or mixtures thereof.

30. The process for the treatment of oily residues coming from the oil industry according to any of the claims from 26 to 29, wherein said sedimentation is carried out at a temperature ranging from 40°C to 100°C, for a time ranging from 12 hours to 70 hours, obtaining the following two phases: (iii) an oily phase which is sent to the oil refinery plant; (iv) an aqueous phase which is sent to the water treatment plant (TAS).

31. The process for the treatment of oily residues coming from the oil industry according to claim 22, wherein said separation is carried out by means of a three-phase centrifuge and at least one de-emulsifying agent is added to said oily residues-solvent mixture.

32. The process for the treatment of oily residues coming from the oil industry according to claim 31, wherein said de-emulsifying agent is added in a quantity so as to obtain a concentration of said de-emulsifying agent in said oily residues-solvent mixture, ranging from 0.1% to 1% by weight with respect to the total weight of said oily residues-solvent mixture.

33. The process for the treatment of oily residues coming from the oil industry according to claim 31 or 32, wherein said de-emulsifying agent is selected from those reported in claim 29.

34. The process for the treatment of oily residues coming from the oil industry according to any of the claims from 31 to 33, wherein said separation is carried out by means of a three-phase centrifuge operating with a revs number ranging from 5 rpm to 5,000 rpm, at a temperature ranging from 50°C to 100°C, for a time ranging from 0.5 minutes to 10 minutes, obtaining the following three phases: (v) an oily phase which is sent to the oil refinery plant; (vi) a solid phase which is sent to thermodestruction; (vii) an aqueous phase which is sent to the water treatment plant (TAS).

35. The process for the treatment of oily residues coming from the oil industry according to any of the previous claims, wherein said process is carried out in the presence of at least one inert gas such as nitrogen, argon, or mixtures thereof.

36. The process for the treatment of oily residues coming from the oil industry according to claim 35, wherein said inert gas is nitrogen.
